# EUROPÄISCHE PATENTSCHRIFT

(11) **EP 1 002 199 B1**
(45) Veröffentlichungstag und Bekanntmachung des Hinweises auf die Patenterteilung: **04.10.2001**
(21) Anmeldenummer: 98945096.0
(22) Anmeldetag: 25.07.1998
(51) Int. Cl.: F16D 23/06

(54) **KUPPLUNGSZAHN EINER SCHALTMUFFE EINER ZAHNRADKUPPLUNG ZUM ANKUPPELN EINES ZAHNRADES AN SEINE WELLE**
COUPLING TOOTH OF A SELECTOR SLEEVE OF A GEAR COUPLING FOR COUPLING A GEAR WHEEL TO ITS SHAFT
DENT D'ACCOUPLEMENT D'UN MANCHON DE COMMANDE D'UN ACCOUPLEMENT A ENGRENAGES POUR ACCOUPLER UN ENGRENAGE A SON ARBRE

(30) Priorität: 08.08.1997 DE 19734492
(43) Veröffentlichungstag der Anmeldung: 24.05.2000
(73) Patentinhaber: DaimlerChrysler AG, 70567 Stuttgart (DE)
(72) Erfinder: SCHETTER, Martin, D-74354 Besigheim (DE); SPERBER, Ralf, D-73240 Wendlingen (DE)
(86) Internationale Anmeldenummer: EP9804671
(87) Internationale Veröffentlichungsnummer: WO9908014

(56) Entgegenhaltungen:
- EP-A- 0 500 408
- DE-C- 4 413 169

## Beschreibung

Die Erfindung betrifft einen Kupplungszahn einer Schaltmuffe nach dem Oberbegriff von Patentanspruch 1.

Aus der EP 0 288 718 B1 ist es bekannt, sämtliche Kupplungszähne einer Schaltmuffe einer Zahnradkupplung zum Ankuppeln eines Zahnrades an seine Welle sowohl nach der gattungsgemäßen Art als auch noch symmetrisch zur signifikanten Zahnlängsmittelebene so auszubilden, daß der jeweilige reduzierte Zahnflankenabschnitt in Form einer Ausnehmung in der Seitenflanke des Zahnes vorgesehen ist, in welche im eingerückten Zustand ein korrespondierender hinterschnittener Zahnflankenabschnitt eines Kupplungszahnes des Zahnrades mit radialer Überdeckung eingreift, um ein Zurückspringen der Schaltmuffe in ihre Neutralstellung zu vermeiden.

Auch bei den bekannten gattungsgemäßen Kupplungszähnen von Schaltmuffen der EP 0 276 382 B1 und der DE-PS 845 903 sind die jeweils reduzierten Zahnflankenabschnitte in Form von Ausnehmungen in den Seitenflanken des Zahnes ausgebildet, welche im Falle der EP-B1 mit hinterschnittenen Zahnflankenabschnitten und im Falle der DE-PS mit Ausnehmungen in den Seitenflanken der Kupplungszähne des Zahnrades zusammenarbeiten, um das Herausspringen der Schaltmuffe aus der Kupplungsverzahnung des Zahnrades zu verhindern. Bei diesen bekannten Kupplungszähnen mit reduzierten Zahnflankenabschnitten in Form von Ausnehmungen in den Seitenflanken des Zahnes gehen die Endschrägflächen an den Stirnenden zwar durch zusätzliche Führungsflächen mit parallelem Verlauf zur signifikanten Zahnlängsebene in die jeweilige Ausnehmung über, so daß die Führungslänge der Schaltmuffe in vorteilhafter Weise vergrößert ist. Es ergibt sich jedoch bei diesen bekannten Kuplungszähnen der Schaltmuffe eine unerwünschte Verlängerung des Einrückweges der Zahnradkupplung, weil der sich axial zwischen der Ausnehmung und dem Stirnende des Zahnes erstreckende Zahnabschnitt einen Totweg als Abstand zum Zahnrad erfordert.

Aus der EP 0 195 706 B1 ist eine Schaltmuffe einer Zahnradkupplung zum Ankuppeln eines Zahnrades an seine Welle mit gattungsfremden Kupplungszähnen ohne hinterschnittene Zahnflankenabschnitte bekannt, bei der jedes Paar oder die Mehrzahl der Paare aufeinanderfolgender Kupplungszähne an den beiden einander gegenüberstehenden Flanken abwechselnd zwei zentrale Verdickungen, zwischen die einer der der Welle bewegungsfest zugeordneten Mitnahmezähne verschiebbar eingreift, oder zwei an den Enden vorgesehene, in Umfangsrichtung abgehende Vorsprünge aufweist, wobei die Vorsprünge - wenn die Schaltmuffe in ihre eingekuppelte Stellung gebracht wird - jeweils mit einem hinterschnittenen Zahnflankenabschnitt eines Kupplungszahnes des Zahnrades in radiale Überdeckung gelangen, um ein Zurückspringen der Schaltmuffe in ihre Neutralstellung zu vermeiden. Abgesehen davon, daß die Vorsprünge der Kupplungszähne der Schaltmuffe sich ungünstig beim Durchfahren der Sperrverzahnung des Synchronringes auswirken, können bei dieser bekannten Schaltmuffe diejenigen Kupplungszähne, welche ohne zentrale Verdickungen - sondern nur mit den endseitigen Vorsprüngen versehen sind - keine Führungsfunktion ausüben, so daß die Drehmomentübertragungsfähigkeit der Schaltmuffe beeinträchtigt ist.

Aus der DE 44 13 169 C1 ist ein Kupplungszahn einer Schaltmuffe einer Zahnradkupplung zum Ankuppeln eines Zahnrades an seine Welle bekannt, bei dem sein in bezug die Richtungen der Zentralachse der Schaltmuffe mittig angeordneter Führungsabschnitt in den beiden Umfangsrichtungen der Zentralachse durch je eine parallel zur Zentralachse verlaufende Führungsfläche begrenzt wird sowie der Führungsabschnitt in eine zur Welle konzentrische und bewegungsfeste axiale Mitnahmeverzahnung axial verschiebbar und drehfest einführbar ist, und bei dem die seine Begrenzung in den Richtungen der Zentralachse bildenden Stirnenden je zwei dachförmig zueinander angeordnete Endschrägflächen aufweisen, deren gemeinsame Scheitelkante in einer die Zentralachse enthaltenden signifikanten Zahnlängsebene liegt, und bei dem die eine Seitenflanke eine Führungsfläche des Führungsabschnittes, einen sich in der auf ein Stirnende weisenden Richtung der Zentralachse anschließenden und in seinem Abstand zur signifikanten Zahnlängsebene reduzierten Zahnflankenabschnitt sowie die wie die Führungsfläche auf derselben Seite der signifikanten Zahnlängsebene liegende eine Endschrägfläche enthält, und bei dem die eine Endschrägfläche unmittelbar in einen hinterschnittenen Zahnflankenabschnitt übergeht, der in Richtung des Führungsabschnittes einen mit geraden Flankenlinien konvergierenden Verlauf relativ zu der signifikanten Zahnlängsebene aufweist, und bei dem die andere Endschrägfläche in der auf den Führungsabschnitt weisenden Richtung der Zentralachse in eine parallel zur Zentralachse verlaufende und mit der auf derselben Seite der signifikanten Zahnlängsebene liegenden Führungsfläche des Führungsabschnittes eine zusammenhängende durchgehende Fläche bildende Gesamtführungsfläche übergeht, deren Abstand zur signifikanten Zahnlängsebene kleiner ist als der Abstand der auf der anderen Seite der signifikanten Zahnlängsebene liegenden Führungsfläche des Führungsabschnittes zur signifikanten Zahnlängsebene.

Die der Erfindung zugrunde liegende Aufgabe besteht im wesentlichen darin, unter Beibehaltung einer vergrößerten Führungslänge die geschilderte Vergrößerung des Einrückweges (Schaltweges) der Schaltmuffe zu vermeiden.

Die erläuterte Aufgabe ist gemäß der Erfindung mit den kennzeichnenden Merkmalen von Patentanspruch 1 in vorteilhater Weise gelöst.

Bei dem Kupplungszahn nach der Erfindung ist eine dritte Führungsfläche auf der einen Flankenseite im Bereich des einen Stirnendes ausgebildet, durch welche die Führungslänge des Kupplungszahnes in der eingekuppelten Stellung der Schaltmuffe bedeutend verlängert ist, so daß ein Klemmen der Schaltmuffe in der der Welle zugeordneten Mitnahmeverzahnung nicht mehr auftritt.
Der Kupplungszahn nach der Erfindung kann aus einem im Ausgangszustand symmetrisch mit hinterschnittenen Zahnflankenabschnitten auf beiden Zahnflankenseiten beiderseits einer Zahnlängsmittelebene ausgebildeten konventionellen Kupplungszahn dadurch hergestellt werden, daß die Zahndicke auf der einen Seite der ursprünglich mittig liegenden Zahnlängsebene parallel zur Zentralachse der Schaltmuffe um ein konstantes Maß soweit reduziert wird, daß am jeweiligen Stirnende eine relativ kurze separate dritte Führungsfläche resultiert.

Bei einer vorteilhaften Anwendung der Erfindung gemäß Patentanspruch 2 kann die Schaltmuffe sowohl mit konventionellen Kupplungszähnen mit symmetrischen hinterschnittenen Zahnflankenabschnitten als auch mit erfindungsgemäßen Kupplungszähnen mit einer dritten Führungsfläche im Bereich der Stirnenden versehen sein.

Bei einer vorteilhaften Ausgestaltung einer solchen Anwendung können die Kupplungszähne in zwei Gruppen unterteilt sein, die zunächst ausgehend von einer gemeinsamen Ausgangszahndicke alle symmetrisch die maßlich gleiche Form und Tiefe der hinterschnittenen Zahnflankenabschnitte aufweisen.
Die erste Gruppe besteht aus konventionellen symmetrischen Zähnen, die bei sämtlichen Funktionen der Verzahnung wie Einspuren, Sperren, Entsperren, Leerwege und Ganghaltung in der üblichen Art und Weise wirksam sind.
Die Zahndicke der Zähne der zweiten Gruppe wird während des Fertigungsprozesses einseitig reduziert. Die der Welle zugeordnete Mitnahmeverzahnung wird an den entsprechenden Stellen um das an der Schaltmuffe reduzierte Maß verstärkt, so daß die Verzahnungsspiele unverändert bleiben.
Bei der Herstellung einer solchen Schaltmuffe wird bei der zunächst symmetrisch,d.h. mit einer Gruppe von Ausgangszähnen geräumten und mit einer einheitlichen Form für die hinterschnittenen Zahnflankenabschnitte gewalzten Schaltmuffe beim nachfolgenden Arbeitsgang Kalibrierräumen mit einer entsprechend ausgeführten Räumnadel an den Führungsflächen nicht nur das geringe Kalibriermaß, sondern zusätzlich auch das Zahndickenmaß zur Erzeugung der dritten Führungsfläche abgenommen. Dieses Verfahren ist vorteilhaft, weil gegenüber einer konnventionellen Verzahnung weder zusätzliche Arbeitsgänge noch das Einwalzen von hinterschnittenen Zahnflankenabschnitten unterschiedlicher Tiefe erforderlich sind.
Bei Zahnradkupplungen zum Ankuppeln eines Zahnrades an seine Welle ist die Verwendung eines ringförmigen, konzentrisch und bewegungsfest zur Welle angeordneten sowie die Mitnahmeverzahnung für die Schaltmuffe aufweisenden Schaltmuffenträgers üblich. In Anwendung der Erfindung auf eine derartige Zahnradkupplung können bei dieser die Schaltmuffe und die Mitnahmeverzahnung nach der Lehre von Patentanspruch 3 ausgestaltet sein. Auf diese Weise ergeben sich jeweils symmetrische Zahnlücken an der Schaltmuffe mit jeweils zwei symmetrisch zum verstärkten Mitnahmezahn des Schaltmuffenträgers liegenden asymmetrischen Kupplungszähnen. Der Vorteil einer solcherart ausgestalteten Zahnradkupplung liegt in der einfachen Gestaltung des Zuliefererteiles 'Schaltmuffenträger', welches so auch auf Umschlag eingebaut werden kann.

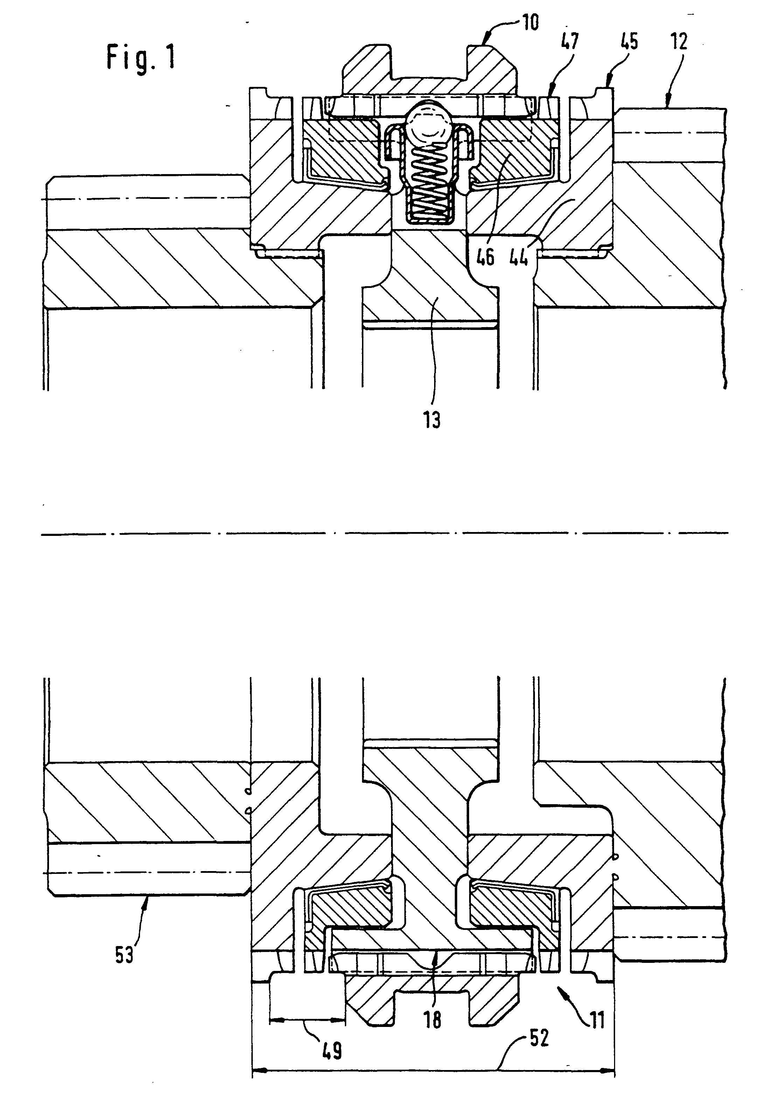

Die Erfindung ist nachstehend anhand einer in der Zeichnung schematisch dargestellten Ausführungsform näher beschrieben. In der Zeichnung bedeuten
- Fig. 1: einen Axialschnitt durch eine Zahnradkupplung zum Ankuppeln eines Zahnrades an seine Welle mit einer Kupplungszähne gemäß der Erfindung aufweisenden Schaltmuffe,
- Fig. 2: einen in Abwicklung dargestellten Längsschnitt durch die Verzahnungen von Schaltmuffe und Schaltmuffenträger der Zahnradkupplung von Figur 1,

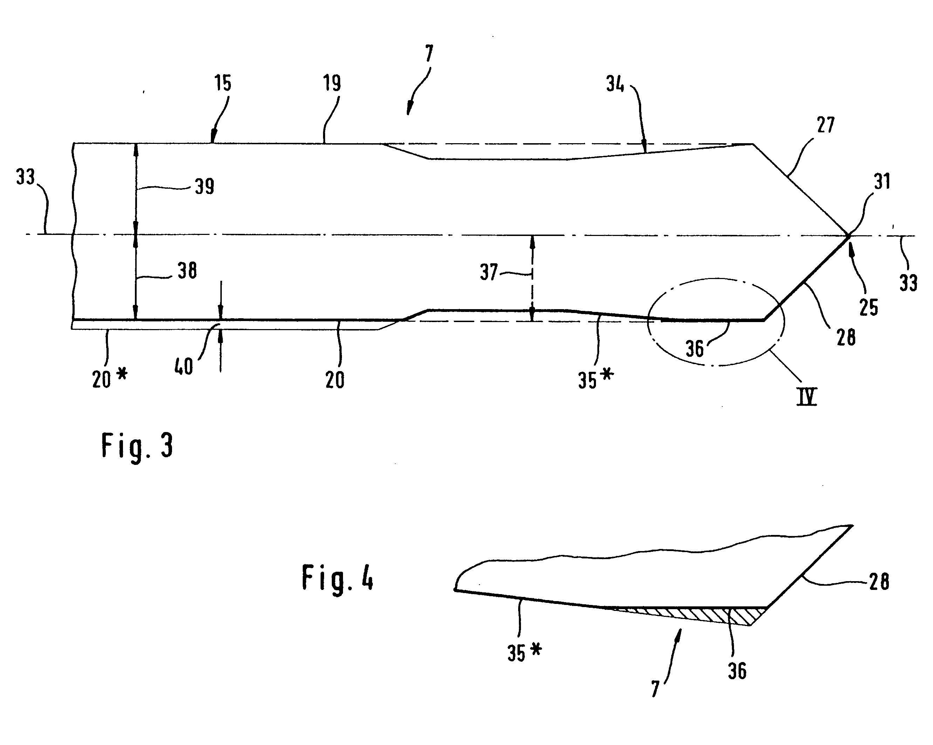

- Fig. 3: einen Längsschnitt durch einen der erfindungsgemäßen Kupplungszähne der Schaltmuffe von Figur 1,
- Fig. 4: die Einzelheit IV des Kupplungszahnes von Figur 3 in vergrößertem Maßstab,
- Fig. 5: einen in Abwicklung dargestellten Längsschnitt durch die Zahnradkupplung von Figur 1 im eingekuppelten Zustand der Schaltmuffe in vergrößertem Maßstab, wobei lediglich der Eingriff mit radialer Überdeckung der hinterschnittenen Zahnflankenabschnitte eines der konventionellen Kupplungszähne der Schaltmuffe und eines Kupplungszahnes des anzukuppelnden Zahnrades gezeigt ist, und
- Fig. 6: einen in Abwicklung dargestellten Längsschnitt entsprechend der Darstellung in Figur 5 durch eine Zahnradkupplung, bei welcher die Kupplungszähne der Schaltmuffe in einer von der Erfindung abweichenden Weise gestaltet sind.
Auf einer zu einer Zentralachse 14-14 einer Zahnradkuplung 11 koaxialen, jedoch nicht weiter dargestellten Welle ist ein ringförmiger Schaltmuffenträger 13 konzentrisch und bewegungsfest angeordnet, welcher an seinem Außenumfang eine äußere axiale Mitnahmeverzahnung 18 aufweist, in welche eine gleichfalls ringförmige und konzentrisch zur Zentralachse 14-14 angeordnete Schaltmuffe 10 mit einer inneren korrespondierenden Kuppplungsverzahnung 7,8 axial verschiebbar und drehfest eingreift.
Seitlich neben dem Schaltmuffenträger 13 ist auf der Welle ein Zahnrad 12 drehbar und axial unverschiebbar gelagert, welches auf seiner dem Schaltmuffenträger 13 zugekehrten Stirnseite einen zur Zentralachse 14-14 konzentrischen Kupplungsring 44 aufweist, der zum Zahnrad 12 bewegungsfest angeordnet ist und eine äußere Kupplungsverzahnung 45 aufweist, in welche die Schaltmuffe 10 mit ihrer korrespondierenden inneren Kupplungsverzahnung 7,8 axial einfahrbar ist.
In dem axialen Zwischenraum zwischen dem Zahnrad 12 und dem Schaltmuffenträger 13 ist ein zur Zentralachse 14-14 konzentrischer Synchronring 46 angeordnet, welcher zum Schaltmuffenträger 13 begrenzt drehbeweglich fixiert ist und eine äußere, zur Zentralachse 14-14 konzentrische Sperrverzahnung 47 aufweist, welche in der üblichen Weise von der Kupplungsverzahnung 7,8 der Schaltmuffe 10 nach Herstellung des Gleichlaufes von Zahnrad und Welle durchfahren wird.

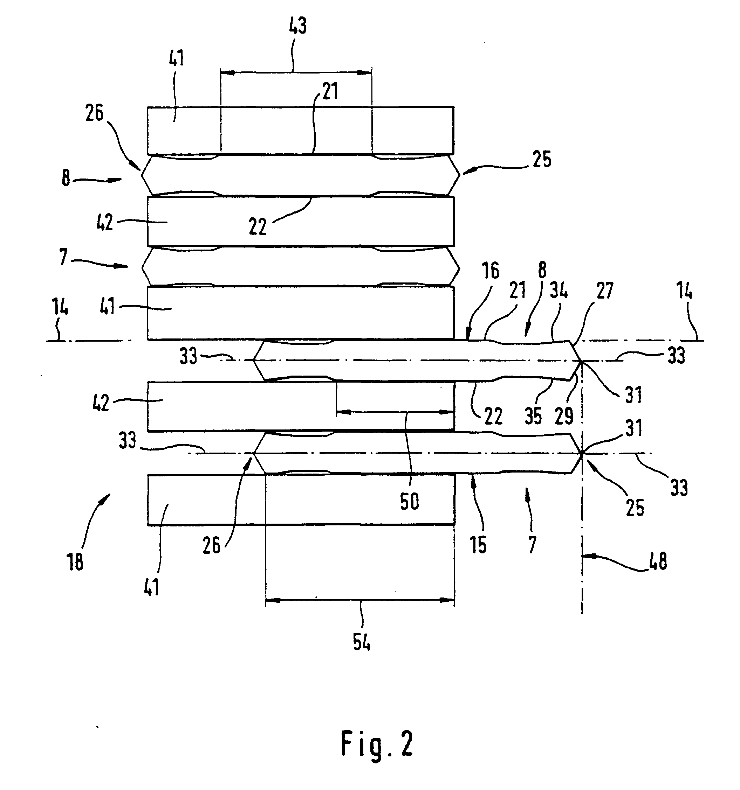

Bei dem Ausführungsbeispiel der Figur 2 weist die Schaltmuffe 10 in Umfangsrichtung in wechselnder Reihenfolge angeordnete Kupplungszähne 7 gemäß der Erfindung sowie konventionelle Kupplungszähne 8 auf.
Die Kupplungszähne 8 weisen einen mittleren Führungsabschnitt 16 mit zwei symmetrisch zu einer die Zentralachse 14-14 enthaltenden signifikanten Zahnlängsebene 33-33 liegenden Führungsflächen 21 und 22 mit der Führungslänge 43 auf. Diese Führungslänge 43 reduziert sich aufgrund des zurückgelegten Schaltweges 49 in der eingerückten Stellung 48 der Schaltmuffe 10 auf die kürzere Überdeckungslänge 50 gegenüber der Mitnahmeverzahnung 18.
Die Kupplungszähne 8 weisen an ihren Stirnenden 25 und 26 zur Zahnlängsebene 33-33 geneigt verlaufende Endschrägflächen 27 und 29 auf, welche zur Zahnlängsebene 33-33 symmetrisch ausgebildet sind, so daß ihre gemeinsame Scheitelkante 31 in der Zahnlängsebene 33-33 liegt.Von den beiden Endschrägflächen 27 und 29 geht jeweils in der auf den Führungsabschnitt 16 weisenden Richtung der Zentralachse 14-14 ein hinterschnittener Zahnflankenabschnittt 34 und 35 aus, wobei diese Zahnflankenabschnitte in Richtung des Führungsabschnittes 16 mit geraden Flankenlinien konvergierend verlaufen.

Aufgrund einer entsprechenden Ausgestaltung des Kupplungszahnes 45 am Kupplungsring 44 des Zahnrades 12 ergibt sich in der eingerückten Stellung 48 der Schaltmuffe 10 eine axiale Einschaltüberdeckung 51 zwischen den Kupplungszähnen 8 und 45, welche die Aufgabe hat, die Schaltmuffe 10 im eingerückten Zustand durch einen drehmomentbeaufschlagten Hinterschnitt gegen Herausspringen zu sichern. Hier ist - abhängig von Gangposition und Getriebeaufbau - ein bestimmtes Mindestmaß der überdeckten Länge erforderlich. Diese aufgrund des konvergierenden Verlaufes der hinterschnittenen Flankenabschnitte 34,35 "konische" Einschaltüberdeckung 51 baut in den Richtungen der Zentralachse 14-14 zwar in vorteilhafter Weise kurz, so daß die Gesamtbaulänge 52 der üblicher Weise als Wechselschaltkupplung für das Zahnrad 12 und ein zweites Zahnrad 53 ausgebildeten Zahnradkupplung 11 kurz gehalten werden kann, jedoch kann ein Klemmen der Schaltmuffe 10 in der Mitnahmeverzahnung 18 wegen der Verkürzung der Führungslänge 43 auf die Überdeckungslänge 50 nicht mit Sicherheit vermieden werden.
Dieses Klemmen ist durch die Erfindung dadurch vermieden, daß bei den Kupplungszähnen 7 - welche im Ausgangszustand in ihrer Ausgestaltung mit den Kupplungszähnen 8 identisch sind - jeweils eine Flankenseite 20* parallel zur signifikanten Zahnlängsebene 33-33 um ein konstantes Maß 40 zurückgesetzt ist, so daß im Bereich des einen Stirnendes 25 des Kupplungszahnes 7 am Übergang zwischen der einen Endschrägfläche 28 und dem hinterschnittenen Zahnflankenabschnitt 35* eine zusätzliche dritte Führungsfläche 36 mit einer zur Zentralachse 14-14 parallelen Flankenlinie entstanden ist, welche einen Abstand 37 zur signifikanten Zahnlängsebene 33-33 aufweist, der gleich dem Abstand 38 der auf diese Weise zurückgesetzten Führungsfläche 20 am mittleren Führungsabschnitt 15 des Kupplungszahnes 7 ist.
In entsprechender Weise ist ein zugeordneter benachbarter Mitnahmezahn 41 am Schaltmuffenträger 13 verbreitert, so daß sich das Zahnflankenspiel nicht verändert.
Die auf der anderen Seite der Zahnlängsebene 33-33 liegende Flankenseite des Kupplungszahnes 7 ist naturgemäß konventionell ausgebildet, d.h., die mit der Endschrägfläche 28 einen in der Zahnlängsebene 33-33 liegenden gemeinsamen Scheitel 31 aufweisende Endschrägfläche 27 geht in der auf den Führungsabschnitt 15 weisenden Richtung der Zentralachse 14-14 in einen hinterschnittenen Zahnflankenabschnitt 34 über, welcher bis zu der Führungsfläche 19 des Führungsabschnittes 15 konvergierend zur Zahnlängsebene 33-33 verläuft. Die Führungsfläche 19 weist zur Zahnlängsebene 33-33 den gegenüber dem Abstand 38 um das Maß 40 größeren Abstand 39 auf.In entsprechender Weise weist der zwischen die Führungsflanke 19 und einen konventionellen Kupplungszahn 8 eingreifende Mitnahmezahn 42 des Schaltmuffenträgers 13 die normale ursprüngliche Zahndicke auf.

Bei einigen oder der Hälfte der Kupplungszähne 7 nach der Erfindung kann anstelle der die Führungsfläche 20* aufweisenden Zahnflankenseite die die Führungsfläche 19 aufweisende Zahnflankenseite um ein konstantes Maß zurückgesetzt sein.

Beiderseits zu - bzw. in Umfangsrichtung vor und nach - einem konventionellen-Kupplungszahn 8 können zwei Kupplungszähne 7 angeordnet sein, von denen bei einem die Führungsfläche 19 und bei dem anderen die Führungsfläche 20 bzw. 20* zurückgesetzt ist.

All diesen erfindungsgemäßen Ausgestaltungen ist der Vorteil gemeinsam, daß die weniger als eine halbe Zahnlänge eines Mitnahmezahnes 41 bzw. 42 betragende Überdeckungslänge 50 eines konventionellen Kupplungszahnes 8 auf eine mehr als die halbe Zahnlänge eines Mitnahmezahnes 41 bzw. 42 betragende Überdeckungslänge 54 vergrößert ist, so daß die erläuterten Klemmerscheinungen nicht mehr auftreten.

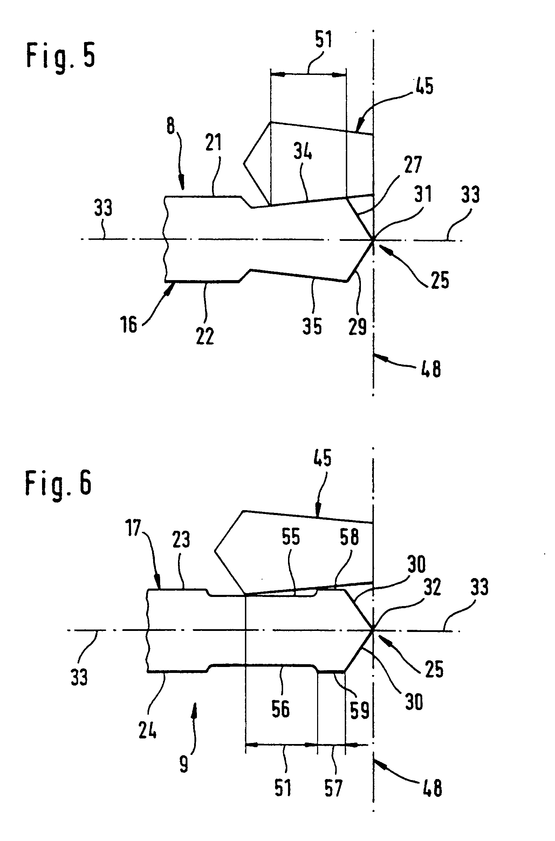

Bei dem fiktiven Beispiel eines Kupplungszahnes 9 für eine Schaltmuffe nach Figur 6 sind an dem einen Stirnende 25 symmetrisch zu einer Zahnlängsmittelebene 33-33 Endschrägflächen 30,30 mit einer gemeinsamen, in der Zahnlängsmittelebene liegenden Scheitelkante 31 ausgebildet, welche jeweils in eine zur Zentralachse 14-14 parallel verlaufende Führungsfläche 58 bzw. 59 übergehen. Der mittlere Führungsabschnitt 17 des Kupplungszahnes 9 weist die üblichen symmetrischen Führungsflächen 23 und 24 auf, welche in der auf das Stirnende 25 weisenden Richtung der Zentralachse 14-14 in je einen gegenüber der seitengleichen Führungsfläche 58 bzw. 59 hinterschnitten ausgebildeten Zahnflankenabschnitt 55 bzw. 56 übergehen, dessen Flankenlinie ebenfalls parallel zur Zentralachse 14-14 verläuft. Wenn bei diesem Beispiel die Schaltmuffe in ihre eingekuppelte Stellung 48 gebracht und mit 51 das Mindest-Maß der Einschaltüberdeckung realisiert ist, dann ist hierfür ein um die Länge 57 der Führungsfläche 58 bzw. 59 größerer Schaltweg erforderlich.

## Patentansprüche

1. Kupplungszahn (7) einer Schaltmuffe (10) einer Zahnradkupplung (11) zum Ankuppeln eines Zahnrades (12) an seine Welle , bei dem sein in bezug auf die Richtungen der Zentralachse (14-14) der Schaltmuffe (10) mittig angeordneter Führungsabschnitt (15) in den beiden Umfangsrichtungen der Zentralachse (14-14) durch je eine parallel zur Zentralachse (14-14) verlaufende Führungsfläche (19,20) begrenzt wird sowie der Führungsabschnitt (15) in eine zur Welle konzentrische und bewegungsfeste Mitnahmeverzahnuung (18) axial verschiebbar und drehfest einführbar ist, und bei dem die seine Begrenzung in den Richtungen der Zentralachse (14-14) bildenden Stirnenden (25,26) je zwei dachförmig zueinander angeordnete Endschrägflächen (27,28) aufweisen, deren gemeinsame Scheitelkante (31) in einer die Zentralachse (14-14) enthaltenden signifikanten Zahnlängsebene (33-33) liegt, und bei dem die Seitenflanken jeweils eine Führungsfläche (19,20) des Führungsabschnittes (15), einen sich in der auf ein Stirnende (25,26) weisenden Richtung der Zentralachse (14-14) anschließenden und in seinem Abstand zur signifikanten Zahnlängsebene (33-33) reduzierten Zahnflankenabschnitt sowie die wie die Führungsfläche (19,20) auf derselben Seite der signifikanten Zahnlängsebene (33-33) liegende Endschrägfläche (27,28) enthalten, und bei dem die eine Endschrägfläche (27) unmittelbar in einen hinterschnittenen Zahnflankenabschnitt (34) übergeht, der in Richtung des Führungsabschnittes (15) einen mit geraden Flankenlinien konvergierenden Verlauf relativ zu der signifikanten Zahnlängsebene (33-33) aufweist,
**dadurch gekennzeichnet,**
**daß** die andere Endschrägfläche (28) in der auf den Führungsabschnitt (15) weisenden Richtung der Zentralachse (14-14) über eine parallel zur Zentralachse (14-14) verlaufende dritte Führungsfläche (36), welche einen gleichgroßen Abstand (37=38) zur signifikanten Zahnlängsebene (33-33) aufweist wie die auf derselben Seite der signifikanten Zahnlängsebene (33-33) liegende Führungsfläche (20) des Führungabschnittes (15), in einen hinterschnittenen Zahnflankenabschnitt (35*) übergeht, der in Richtung des Führungsabschnittes (15) einen mit geraden Flankenlinien konvergierenden Verlauf relativ zu der signifikanten Zahnlängsebene (33-33) aufweist, und daß der Abstand (37) der dritten Führungsfläche (36) zur signifikanten Zahnlängsebene (33-33) kleiner ist als der Abstand (39) der auf der anderen Seite der signifikanten Zahnlängsebene (33-33) liegenden Führungsfläche (19) des Führungsabschnittes (15) zur signifikanten Zahnlängsebene (33-33).

2. Schaltmuffe (10) einer Zahnradkupplung (11) zum Ankuppeln eines Zahnrades (12) an seine Welle mit wenigstens einer Gruppe von Kupplungszähnen (8) mit ausschließlich am Führungsabschnitt (15) ausgebildeten Führungsflächen (21,22) und mit wenigstens einer Gruppe von Kuppungszähnen (7) nach Patentanspruch 1.

3. Zahnradkupplung zum Ankuppeln eines Zahnrades (12) an seine Welle mit einer Schaltmuffe (10) nach Patentanspruch 2, und bei der zwei in Umfangsrichtung benachbarte Kupplungszähne (7) nach Patentanspruch 1 mit in entgegengesetzten Umfangsrichtungen wirkenden dritten Führungsflächen (36) beiderseits und symmetrisch zu einem zur Welle bewegungsfesten Mitnahmezahn angeordnet sind, welcher in beiden Umfangsrichtungen um die jeweilige Abstandsdifferenz (40) der dritten Führungsfläche (36) des angrenzenden Kupplungszahnes (7) verbreitert ist.

## Claims

1. Coupling tooth (7) of an operating sleeve (10) of a gear coupling (11) for coupling a gear (12) with its shaft, in which the guide section (15) thereof, disposed centrally relative to the directions of the central axis (14-14) of the operating sleeve (10), is bounded in both circumferential directions of the central axis (14-14) by a respective guide surface (19, 20) extending parallel with the central axis (14-14), and the guide section (15) can be inserted so as to be axially slidable and prevented from rotating in stationary drive teeth (18) concentric with the shaft, and in which the end faces (25, 26) by which it is bounded in the directions of the central axis (14-14) each have two inclined end faces (27, 28) in a roof-shaped arrangement, the common peak edge (31) of which lies in a significant tooth longitudinal plane (33-33) containing the central axis (14-14), and in which each of the flanks contains a guide surface (19,20) of the guide section (15), a tooth flank section adjoining the central axis (14-14) pointing in the direction of an end face (25, 26) and at a reduced distance from the significant tooth longitudinal plane (33-33) as well as the inclined end face (27, 28) lying on the same side of the significant tooth longitudinal plane (33-33) as the guide face (19, 20), and in which the one inclined end face (27) merges immediately into an undercut tooth flank section (34) with a profile having straight flank lines converging in the direction of the guide section (15) relative to the significant tooth longitudinal plane (33-33),
**characterised in that**
in the direction of the central axis (14-14) pointing towards the guide section (15), the other inclined end face (28) merges, via a third guide surface (36) extending parallel with the central axis (14-14), which is at a same distance (37=38) from the significant tooth longitudinal plane (33-33) as the guide surface (20) of the guide section (15) lying on the same side of the significant tooth longitudinal plane (33-33), into an undercut tooth flank section (35*), which, in the direction of the guide section (15), has a profile with straight flank lines converging relative to the significant tooth longitudinal plane (33-33) and **in that** the distance (37) to the significant tooth longitudinal plane (33-33) of the third guide surface (36) is smaller than the distance (39) to the significant tooth longitudinal plane (33-33) of the guide surface (19) of the guide section (15) on the other side of the significant tooth longitudinal plane (33-33).

2. Operating sleeve (10) of a gear coupling (11) for coupling a gear (12) with its shaft, having at least one group of coupling teeth (8) with guide surfaces (21, 22) provided exclusively on the guide section (15) and having at least one group of coupling teeth (7) as claimed in claim 1.

3. Gear coupling for coupling a gear (12) with its shaft, having an operating sleeve (10) as claimed in claim 2, and in which two coupling teeth (7) as claimed in claim 1, adjacent in a circumferential direction, having third guide surfaces (36) acting in different circumferential directions, are provided on either side of and symmetrically with respect to a drive tooth, which is non-displaceable relative to the shaft and which is wider in both circumferential directions by the respective differential distance (40) of the third guide surface (36) of the adjoining coupling tooth (7).

## Revendications

1. Roue dentée (7) d'un manchon de manoeuvre (10) d'un accouplement pour roue dentée (11) pour coupler une roue dentée (12) à son arbre, dans laquelle son tronçon de guidage (15), disposé centralement par rapport aux directions de l'axe central (14-14), du manchon de manoeuvre (10) est limité dans les deux directions périphériques de l'axe central (14-14) chaque fois par une face de guidage (19, 20) s'étendant parallèlement à l'axe central (14-14), et le tronçon de guidage (15) étant susceptible d'être inséré, de façon déplaçable axialement et assujetti en rotation, dans une denture d'entraînement (18) concentrique à l'arbre et assujettie cinématiquement, et pour laquelle les extrémités frontales (25, 26), formant sa limitation dans les directions de l'axe central (14-14), présentent chacune deux faces obliques d'extrémité (27, 28) disposées l'une par rapport à l'autre en forme de toit, dont l'arête de sommet (31) commune est située dans un plan longitudinal de dent (33-33) significatif, contenant l'axe central (14-14), et pour laquelle les flancs de dents contiennent chacun une face de guidage (19, 20) du tronçon de guidage (15) un tronçon de flanc de dent, se raccordant dans la direction de l'axe central (14-14) tourné vers une extrémité frontale (25, 26) et réduisant son espacement par rapport au plan longitudinal de denture (33-33) significatif, et contiennent la face oblique d'extrémité (27, 28) située, comme la face de guidage (19, 20), sur le même côté du plan longitudinal de denture (33-33) significatif, et pour laquelle une face oblique d'extrémité (26) se transforme directement en un tronçon de flanc de dent (37) à contre-dépouille, qui, dans la direction du tronçon de guidage (15), présente une allure convergente avec des lignes de flanc rectilignes par rapport au plan longitudinal de dent (33-33) significatif,
**caractérisé en ce que,**
dans la direction tournée vers le tronçon de guidage (15) de l'axe central (14,14), l'autre face oblique d'extrémité (28) se transforme, en passant par une troisième face de guidage (36) s'étendant parallèlement à l'axe central (14-14), qui présente, par rapport au plan longitudinal de dent (33-33) significatif, un espacement de même valeur (37-38) que la face de guidage (20) située sur le même côté du plan longitudinal de dent (33-33) significatif, du tronçon de guidage (15), en un tronçon de flanc (35*) doté d'une contre-dépouille, qui présente dans la direction du tronçon de guidage (15) une allure allant en convergeant par des lignes de flanc rectilignes, par rapport au plan longitudinal de dent (33-33) significatif, et **en ce que** l'espacement (37) de la troisième face de guidage (36), par rapport au plan longitudinal de dent (33-33) significatif, est inférieur à l'espacement (39) de la face de guidage (19), située de l'autre côté du plan longitudinal de dent (33-33) significatif, du tronçon de guidage (15) par rapport au plan longitudinal de dent (33-33) significatif.

2. Manchon de manoeuvre (10) d'un accouplement pour roue dentée (11) pour coupler une roue dentée (12) à son arbre, avec au moins un groupe de dents d'accouplement (8) ayant des faces de guidage (21, 22) réalisées exclusivement sur le tronçon de guidage (15) et avec au moins un groupe de dents d'accouplement (7) selon la revendication 1 du brevet.

3. Accouplement pour roue dentée pour coupler une roue dentée (12) à son arbre avec un manchon de manoeuvre selon la revendication 2 du brevet, et accouplement pour lequel deux dents d'accouplement (7), voisines en direction périphérique, réalisées selon la revendication 1 du brevet, sont disposées avec des troisièmes faces de guidage (36) agissant dans des directions circonférentielles opposées, des deux côtés et symétriquement par rapport à une dent d'entraînement cinématiquement fixe par rapport à l'arbre, qui est élargie dans les deux directions périphériques, de la valeur de la différence d'espacement (40) respective de la troisième face de guidage (26) de la dent d'accouplement (7) limitrophe.
